# EUROPEAN PATENT APPLICATION

(11) **EP 4 498 245 A1**
(43) Date of publication of application: **29.01.2025**
(21) Application number: 23823221.9
(22) Date of filing: 15.06.2023
(51) Int. Cl.: G06F 9/50

(54) **DATA PROCESSING METHOD, APPARATUS, ELECTRONIC DEVICE, AND COMPUTER-READABLE STORAGE MEDIUM**

(30) Priority: 15.06.2022 CN 202210682111; 31.08.2022 CN 202211060725
(71) Applicant: Huawei Technologies Co., Ltd., Shenzhen, Guangdong 518129 (CN)
(72) Inventor: LI, Guojun, Shenzhen, Guangdong 518129 (CN); ZHANG, Ming, Shenzhen, Guangdong 518129 (CN); CHEN, Gong, Shenzhen, Guangdong 518129 (CN); YANG, Peng, Shenzhen, Guangdong 518129 (CN)
(74) Representative: Pfenning, Meinig & Partner mbB
(86) International application number: PCT/CN2023/100447
(87) International publication number: WO 2023/241655

(57) **Abstract**

A data processing method is provided, and relates to the field of chip technologies. According to the method, when a data processing request of an application for a first storage space in a memory is received, a memory bypass flag corresponding to the first storage space is obtained. The memory bypass flag indicates a storage manner of using a cache, and the storage manner is set based on an access requirement of the application for the first storage space. Therefore, when associated data of the first storage space is processed based on the obtained memory bypass flag, the storage manner of using the cache for the associated data may be determined based on the access requirement of the application for the first storage space, so that a cache behavior is controlled based on the access requirement of the application, thereby improving a cache hit rate.

## Description

This application claims priorities to Chinese Patent Application No. 202210682111 .X, filed with the China National Intellectual Property Administration on June 15, 2022 and entitled "METHOD FOR ACCESSING HIGH BANDWIDTH MEMORY", and to Chinese Patent Application No. 202211060725.0, filed on August 31, 2022 and entitled "DATA PROCESSING METHOD AND APPARATUS, ELECTRONIC DEVICE, AND COMPUTER-READABLE STORAGE MEDIUM", which are incorporated herein by reference in their entireties.

### TECHNICAL FIELD

This application relates to the field of chip technologies, and in particular, to a data processing method and apparatus, an electronic device, and a computer-readable storage medium.

### BACKGROUND

In an electronic device, a processor (for example, a central processing unit (central processing unit, CPU)) may generally access storage spaces of a main memory and a cache. The main memory has a large capacity and a high access latency, and the cache has small space but a low access latency. The CPU usually copies a part of data in the main memory to the cache. When a to-be-processed request needs to access the data, the CPU can quickly obtain the data from the cache. A probability of hitting the data to be accessed by the to-be-processed request in the cache may also be referred to as a cache hit rate, and the cache hit rate affects performance of the electronic device.

However, the to-be-processed request usually comes from an application that runs in the CPU. When the application accesses the data in the cache through the to-be-processed request, a cache hit rate is low, and performance of the electronic device is poor. Therefore, a method for improving the performance of the electronic device is urgently needed.

### SUMMARY

This application provides a data processing method and apparatus, an electronic device, and a computer-readable storage medium, to improve a cache hit rate.

According to a first aspect, a data processing method is provided. The method is applicable to an electronic device, where the electronic device includes a first storage medium and a second storage medium, the first storage medium is a memory of the electronic device, and the second storage medium is a cache of the memory. An implementation process of the method includes: first obtaining a data processing request of an application, then obtaining, based on the data processing request, a memory bypass flag corresponding to a first storage space, and processing associated data based on the memory bypass flag. The data processing request indicates to process the associated data of the first storage space in the first storage medium. The memory bypass flag indicates a storage manner of using the second storage medium, and the storage manner is set based on an access requirement of the application for the first storage space.

According to this method, when the data processing request of the application for the first storage space in the memory is received, the memory bypass flag corresponding to the first storage space is obtained. The memory bypass flag indicates the storage manner of using the cache, and the storage manner is set based on the access requirement of the application for the first storage space. Therefore, when the associated data of the first storage space is processed based on the obtained memory bypass flag, the storage manner of using the cache for the associated data may be determined based on the access requirement of the application for the first storage space, so that a cache behavior is controlled based on the access requirement of the application, thereby improving a cache hit rate.

In a possible implementation, the second storage medium is a high bandwidth memory HBM, a use manner of the HBM is a cache mode, and the cache mode indicates that the HBM is used as the cache of the memory.

Based on the foregoing possible implementation, in an application scenario in which the HBM is a cache of the first storage medium, the memory bypass flag indicates that a storage space in the memory uses the HBM, so that the cache behavior of the HBM is controlled based on the access requirement of the application.

In another possible implementation, before the memory bypass flag corresponding to the first storage space is obtained based on the data processing request, the implementation process of the method further includes: first invoking a first application programming interface API in an operating system, setting a bypass flag field in a page table entry of a page table of the first storage medium, and then adding, based on the access requirement recorded in the application, the memory bypass flag to the bypass flag field in the page table entry corresponding to the first storage space, where the bypass flag field is for storing the memory bypass flag.

Based on the foregoing possible implementation, the first API is invoked to set the bypass flag field in the page table, so that a memory bypass attribute is added to the page table. In this way, the bypass flag field can be added to the corresponding page table entry based on the access requirement of the application for the storage space of the memory. A processor can sense an access memory feature of the application through a specified memory bypass flag corresponding to each storage space in the first storage medium. When accessing the storage space in the memory, the processor can determine, based on the memory bypass flag, whether to copy data in the storage space to the cache, so that the cache behavior is controlled based on the access requirement of the application. In this way, the processor subsequently can obtain, from the cache, data required by the application, thereby improving the cache hit rate.

In another possible implementation, an implementation of the invoking a first API in an operating system, and setting a bypass flag field in a page table entry of a page table of the first storage medium is: When the application applies to the operating system for allocating a storage space in the first storage medium or after the application completes applying for allocating the storage space, the first API is invoked and the bypass flag field is set in the page table entry of the page table.

Based on the foregoing possible implementation, when the application applies to the operating system for allocating the storage space in the first storage medium, only a part of code of the application needs to be modified, so that the application can invoke the first API in the operating system through the processor, to set the bypass flag field in the page table entry of the page. This is simple to implement.

In another possible implementation, an implementation of the invoking a first application programming interface API in an operating system, and setting a bypass flag field in a page table entry of a page table of the first storage medium is: in a process of compiling the application by a compiler, invoking the first API through a second API or a directive provided by the compiler, and setting the bypass flag field in the page table entry of the page table.

Based on the foregoing possible implementation, by modifying a part of code of the application and the compiler, during compilation, the application can invoke the first API in the operating system by invoking a compiling interface in the compiler, to set the bypass flag field for the page table entry of the page. This is simple to implement.

In another possible implementation, an implementation of the adding, based on the access requirement recorded in the application, the memory bypass flag to the bypass flag field in the page table entry corresponding to the first storage space includes: first querying, based on the access requirement recorded in the application and a virtual address of the first storage space, the page table entry corresponding to the first storage space, and then adding the memory bypass flag to the found page table entry.

In another possible implementation, before the memory bypass flag corresponding to the first storage space is obtained based on the data processing request, an implementation process of the method further includes: predicting, based on a data transmission attribute of at least one of the first storage medium and the second storage medium, the access requirement of the application for the first storage space, and then setting the memory bypass flag for the first storage space based on the predicted access requirement, where the data transmission attribute indicates impact of the storage medium on efficiency of data transmission.

Based on the foregoing possible implementation, the access requirement of the application for the first storage space is predicted based on a current data transmission attribute of at least one storage medium, so that the access requirement of the application for the first storage space does not need to be recorded in the application, and a real-time access requirement of the application for the storage space in the memory can be satisfied. Therefore, the cache behavior can be controlled in real time by predicting the memory bypass flag set for the access requirement of the application for the first storage space is located.

In another possible implementation, an implementation process of the predicting, based on a data transmission attribute of at least one of the first storage medium and the second storage medium, the access requirement of the application for the first storage space includes: inputting the data transmission attribute into a prediction network, and predicting, based on the input data transmission attribute using the prediction network, the access requirement of the application for the first storage space.

Based on the foregoing possible implementation, a user does not need to modify code of the application, and the operating system does not need to provide the first API, provided that the prediction network can be obtained, and the bypass flag field can be set for the page table entry in the page table of the first storage medium. This is simple to operate.

In another possible implementation, an implementation of the setting the memory bypass flag for the first storage space based on the predicted access requirement includes: first querying, based on the predicted access requirement and a physical address of the first storage space, a page table entry corresponding to the first storage space, and then adding the memory bypass flag to the found page table entry.

In another possible implementation, the data processing request includes the virtual address of the first storage space, and on this basis, an implementation process of the obtaining, based on the data processing request, a memory bypass flag corresponding to the first storage space includes: querying, based on the virtual address of the first storage space, the page table entry corresponding to the first storage space, and then obtaining the memory bypass flag from the found page table entry.

In another possible implementation, an implementation process of the querying, based on the virtual address, the page table entry corresponding to the first storage space includes: querying, based on the virtual address, the page table of the first storage medium for the page table entry corresponding to the first storage space; or querying, based on the virtual address, a translation lookaside buffer TLB of a processor for the page table entry corresponding to the first storage space.

In another possible implementation, an implementation process of the processing associated data based on the memory bypass flag includes the following two cases: if the memory bypass flag indicates to use the second storage medium to store data in the first storage medium, processing the associated data of the first storage space, and copying the associated data of the first storage space to the second storage medium; or if the memory bypass flag indicates not to use the second storage medium to store data in the first storage space, processing the associated data of the first storage space, and skipping performing the step of copying the associated data of the first storage space to the second storage medium.

Based on the foregoing possible implementation, based on the storage manner that is of using the cache and that is indicated by the memory bypass flag, a copy of data in the storage space of the memory is stored in the cache or is not stored in the cache, so that the cache behavior is controlled based on the memory bypass flag.

According to a second aspect, a data processing apparatus is provided. The apparatus includes all modules configured to perform the data processing method according to any one of the first aspect or the possible implementations of the first aspect.

According to a third aspect, an electronic device is provided. The electronic device includes a processor. The processor is configured to execute program code, to enable the electronic device to perform operations performed according to the foregoing data processing method.

According to a fourth aspect, a chip is provided. The chip is configured to implement operation steps of the data processing method according to any one of the first aspect or the possible implementations of the first aspect.

According to a fifth aspect, a processor is provided. The processor is configured to implement operation steps of the data processing method according to any one of the first aspect or the possible implementations of the first aspect.

According to a sixth aspect, a computer-readable storage medium is provided. The storage medium stores at least one piece of program code, and the program code is read by a processor, to enable an electronic device to perform operations according to the foregoing data processing method.

According to a seventh aspect, a computer program product or a computer program is provided. The computer program product or the computer program includes program code, and the program code is stored in a computer-readable storage medium. A processor of an electronic device reads the program code from the computer-readable storage medium, and the processor executes the program code, to enable the electronic device to perform the method provided in any one of the first aspect or the optional implementations of the first aspect.

In this application, the implementations according to the foregoing aspects, may be further combined to provide more implementations.

### BRIEF DESCRIPTION OF DRAWINGS

FIG. 1 is a schematic structural diagram of a data processing system according to this application;
FIG. 2 is a schematic structural diagram of another data processing system according to this application;
FIG. 3 is a flowchart of a data processing method according to this application;
FIG. 4 is a schematic diagram of a data processing system in an electronic device according to this application;
FIG. 5 is a schematic diagram of setting a memory bypass attribute according to this application;
FIG. 6 is a schematic interaction diagram of a data processing method according to this application;
FIG. 7 is another schematic diagram of setting a memory bypass attribute according to this application;
FIG. 8 is a flowchart of another data processing method according to this application;
FIG. 9 is another schematic diagram of setting a memory bypass attribute according to this application;
FIG. 10 is a schematic diagram of predicting an access requirement of an application for a storage space according to this application;
FIG. 11 is a schematic structural diagram of a data processing apparatus according to this application;
FIG. 12 is a schematic structural diagram of a chip according to this application; and
FIG. 13 is a schematic structural diagram of an electronic device according to this application.

### DESCRIPTION OF EMBODIMENTS

For an electronic device including a first storage medium and a second storage medium, this application provides a data processing method in the case that the first storage medium is a memory of the electronic device, and the second storage medium is a cache of the memory. In the method, when an application requests to process associated data of a storage space in the first storage medium, a storage manner of using the second storage medium for the storage space is first obtained. The storage manner is set based on an access requirement of the application for the storage space, and then the obtained storage manner is used to process the associated data.

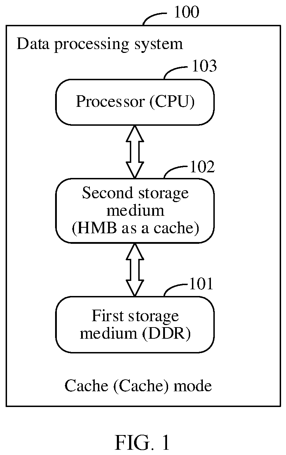

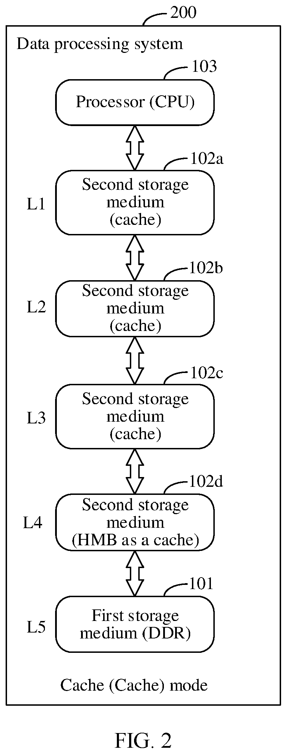

In this case, a use manner of the second storage medium is a cache (Cache) mode, and the cache mode indicates that the second storage medium is used as the cache of the memory (that is, the first storage medium). In a possible implementation, the method is performed by a processor (for example, a CPU) in the electronic device. With reference to FIG. 1 and FIG. 2, the following describes a system architecture including the processor, the first storage medium, and the second storage medium in the cache mode.

FIG. 1 is a schematic structural diagram of a data processing system according to this application. As shown in FIG. 1, the data processing system 100 includes a first storage medium 101, a second storage medium 102, and a processor 103. The first storage medium 101 is used as a memory of the processor 103, and is configured to store data (for example, service data, program code, or computer instructions) to be processed by the processor 103. FIG. 1 is shown by using an example in which the first storage medium 101 is a double data rate synchronous dynamic random access memory (double data Rate SDRAM, DDR). In some embodiments, the first storage medium 101 may be a dynamic random access memory (dynamic random access memory, DRAM) or a main memory (main memory) of another type. Herein, a medium type of the first storage medium 101 is not limited in embodiments of this application.

The second storage medium 102 is used as the cache of the memory. In this case, the use manner of the second storage medium 102 is a cache mode. FIG. 1 is shown by using an example in which the second storage medium 102 is a high bandwidth memory (high bandwidth memory, HBM). In some embodiments, the second storage medium 102 is a static random access memory (static random access memory, SRAM) or a cache of another type. Herein, a medium type of the second storage medium 102 is not limited in embodiments of this application.

For either of the first storage medium 101 and the second storage medium 102, the storage medium includes a plurality of storage spaces, and the storage spaces are for storing data. When the processor 103 (for example, a CPU) runs an application, the application requests to process associated data of a storage space (for example, data read from the storage space, or data written into the storage space) in the first storage medium 101. Based on the request of the application, the to-be-processed associated data is first queried from the cache of the first storage medium 101. If the processor finds the associated data of the storage space in the cache, it is considered that a cache hit (cache hit) occurs. If the processor does not find the associated data of the storage space in the cache, it is considered that a cache miss (cache miss) occurs. If the cache hit occurs, the processor 103 processes the associated data in the cache. If the cache miss occurs, the processor 103 processes the associated data in the first storage medium 101.

In some embodiments, the data processing system 100 includes a plurality of second storage media 102, and the plurality of first storage media 102 are used as multi-level caches of the first storage medium 101. For example, FIG. 2 is a schematic structural diagram of another data processing system according to this application. The data processing system 200 includes a first storage medium 101, second storage media 102a to 102d, and a processor 103. According to a data read/write speed, the second storage media 102a to 102d and the first storage medium 101 are in a one-to-one correspondence with levels L1 to L5, that is, L1> L2> L3> L4> L5. A storage medium with a higher level has a higher data read/write speed.

As shown in FIG. 2, use manners of the second storage media 102a to 102d are all cache modes. FIG. 2 is shown by using an example in which caches of L1 to L3 are all SRAMs, an L4 cache is an HBM, and an L5 memory is a DDR. In different implementation scenarios, the memory may further have less than or more than four caches. A quantity of caches in the memory is not limited herein in embodiments of this application.

For any cache in the multi-level caches of the second storage media 102a to 102d, the cache is configured to store a copy of a part of data stored in a next-level storage medium. When obtaining a request of the application for processing the associated data of the storage space in the first storage medium 101, the processor 103 preferentially queries, in descending order of levels, higher-level caches for whether the associated data of the storage space is stored. For any cache, during a query process, the processor 103 processes the associated data in the cache. If the cache miss (cache miss) occurs, the processor 103 continues to query a next-level storage medium of the cache until the associated data of the storage space is found.

The foregoing data processing system architectures can be deployed in an electronic device. Based on the foregoing data processing system architectures, the following describes, with reference to the accompanying drawings, a process of performing the data processing method by the electronic device.

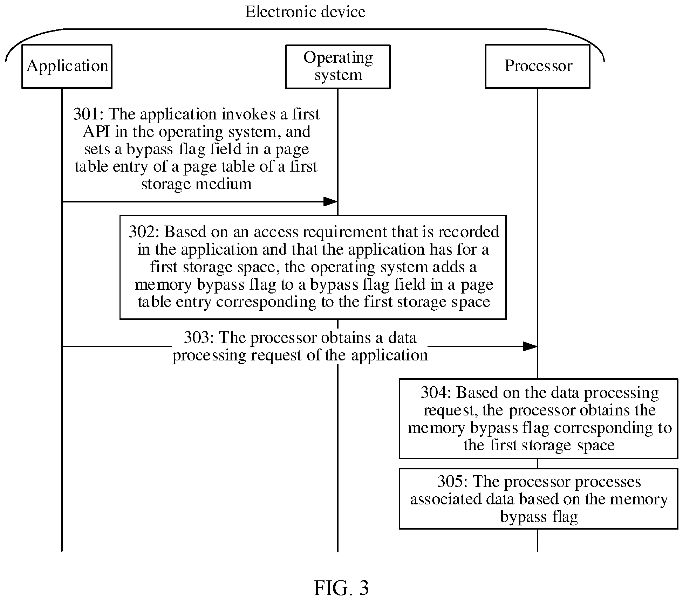

When an application requests to process associated data of a storage space in the first storage medium, a memory bypass flag indicates a storage manner of using the second storage medium for the storage space, and the storage manner is obtained by the processor, and a processor processes the associated data based on the memory bypass flag. To describe the process, refer to FIG. 3 that shows a flowchart of the data processing method according to this application. The method is applicable to the electronic device, where the electronic device includes the first storage medium and the second storage medium, the first storage medium is a memory of the electronic device, and the second storage medium is a cache of the memory. As shown in FIG. 3, the method includes the following step 301 to step 305.

Step 301: The application invokes a first application programming interface (application programming interface, API) in an operating system, and sets a bypass flag field in a page table entry of a page table of the first storage medium. The bypass flag field is for storing the memory bypass flag.

The memory bypass flag indicates the storage manner of using the second storage medium, and the storage manner is set based on an access requirement of the application for the storage space in the first storage medium. The access requirement of the application for the storage space in the first storage medium includes an access requirement that is recorded in the application and that the application has for the storage space in the first storage medium, or a predicted access requirement of the application for the storage space in the first storage medium.

The memory bypass flag includes a first memory bypass flag or a second memory bypass flag. The first memory bypass flag indicates to use the second storage medium to store data in the first storage medium, and the second memory bypass flag indicates not to use the second storage medium to store the data in the first storage medium. The first memory bypass flag and the second memory bypass flag are represented in different manners. For example, the first memory bypass flag is 1, and the second memory bypass flag is 0. Alternatively, the first memory bypass flag is 0, and the second memory bypass flag is 1. Herein, the representation manners of the first memory bypass flag and the second memory bypass flag are not limited in embodiments of this application.

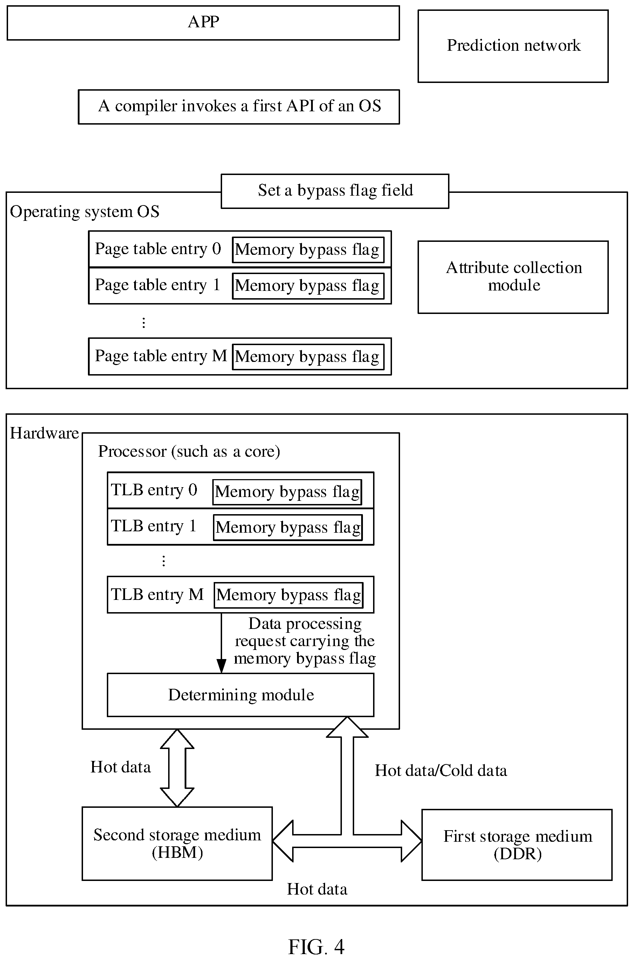

FIG. 4 is a schematic diagram of a data processing system in an electronic device according to this application. For a running process in the electronic device, the operating system (operating system, OS) manages a memory in a unit of a page, and stores a mapping relationship between a virtual address and a physical address of the first storage medium through a page table. The corresponding virtual address and physical address are for indicating a same storage space in the memory. The virtual address includes a page number of a page in which the storage space is located (that is, a page number of the virtual address) and an offset address of the storage space in the page. The physical address includes a page frame number of a page frame in which the storage space is located (that is, a page number of the physical address).

The page table shown in Table 1 is used as an example. The page table includes N+1 page table entries (page table entries), and each page table entry includes one page number and one page frame number, to indicate that a page indicated by the page number is mapped to a page frame corresponding to the page frame number, where N is a positive integer.

**Table 1**

| Page table entry | Page number | Page frame number |
|---|---|---|
| Page table entry 0 | 0 | 0 |
| Page table entry 1 | 1 | 1 |
| ... | ... | ... |
| Page table entry N | N | N |

In embodiments of this application, a function of a page table entry in a page table is further extended. A page table shown in Table 2 is used as an example. A bypass flag field is extended in the page table entry, and the bypass flag field is for storing a memory bypass flag, so that the page table has a memory bypass attribute.

**Table 2**

| Page table entry | Page number | Page frame number | Bypass flag field |
|---|---|---|---|
| Page table entry 0 | 0 | 0 | Memory bypass flag |
| Page table entry 1 | 1 | 1 | Memory bypass flag |
| ... | ... | ... | Memory bypass flag |
| Page table entry N | N | N | Memory bypass flag |

FIG. 4 is still used as an example. The page table managed by the operating system is stored in the first storage medium, and a processor of the electronic device (for example, a core of a CPU) uses a translation lookaside buffer (translation lookaside buffer, TLB) as a cache of the page table. For example, at least one page table entry in the page table is used as a TLB entry (TLB entry), so that the TLB entry has the bypass flag field, and the TLB has the memory bypass attribute.

By invoking the first API in the operating system, the application sets the bypass flag field in the page table entry of the page table of the first storage medium, to add the memory bypass attribute to the page table. In a possible implementation, the first API is a user-defined API for setting the memory bypass attribute, or is an existing API extended for setting the memory bypass attribute. Herein, a type of the first API is not limited in embodiments of this application.

When the first API is an existing API extended for setting the memory bypass attribute, the first API includes a memory-mapped file function, a memory-mapped protection function, and another type of function. Herein, a function type of the first API is not limited in embodiments of this application.

The memory-mapped file function is represented as: void *mmap (void *addr, size_t length, int prot, int flags, int fd, off_t offset). "addr" in the memory-mapped file function indicates a hint (HINT) during memory allocation. "length" indicates a length of data that is in the file and that is mapped to the memory. "prot" indicates a protection manner of a mapping region of the file in the memory. In embodiments of this application, the port function is extended, and a bypass attribute setting flag is added to the port function, where the bypass attribute setting flag indicates that a bypass flag field is set for a page table entry in the page table. "flags" indicate various features of the mapping area. "fd" is a file descriptor, indicating a file mapped to the memory. "offset" indicates a file-mapped offset.

The memory mapping protection function is represented as: int mprotect (void *addr, size_t len, int prot). "addr" in the memory-mapped file function indicates a to-be-modified start address of a protection attribute region in the memory. "len" indicates a length of the protection attribute region. "prot" indicates various attributes of the protection attribute region. In embodiments of this application, a port function is extended, and a bypass attribute setting flag is added to the port, where the bypass attribute setting flag indicates that a bypass flag field is set for a page table entry in the page table.

In a possible implementation, the application invokes the first API in the operating system in either of the following manners 1 and 2.

Manner 1: When the application applies to the operating system for allocating the storage space in the first storage medium or after the application completes applying for allocating the storage space, the application invokes the first API, and sets the bypass flag field in the page table entry of the page table.

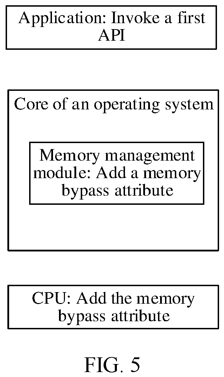

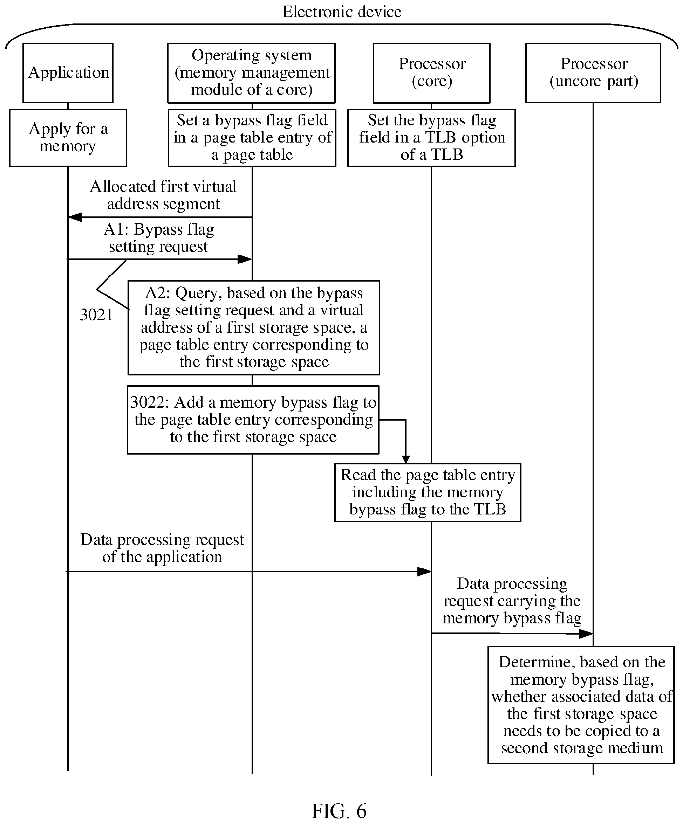

The application is any application installed in the electronic device. FIG. 4 is used as an example. When applying for a storage space of the memory, the application (application, APP) invokes the first API in the operating system to set the bypass flag field. The process is described with reference to FIG. 5 and FIG. 6.

FIG. 5 is a schematic diagram of setting a memory bypass attribute according to this application. FIG. 6 is a schematic interaction diagram of a data processing method according to this application. As shown in FIG. 5 and FIG. 6, when the application is started, a memory allocation request is sent to the operating system (for example, a memory management module in a core of the operating system). The memory allocation request indicates to allocate the storage space in the first storage medium to the application, that is, apply to the operating system for a memory. After receiving the memory allocation request, the operating system allocates the storage space in the first storage medium to the application, and returns a first virtual address segment to the application. The first virtual address segment corresponds to a physical address of at least one storage space allocated to the application. In addition, when the application sends the memory allocation request to the operating system, the memory allocation request triggers invoking of the first API in the operating system, and inputs a bypass attribute setting flag to the first API. Through the bypass attribute setting flag input to the first API, the operating system (for example, a memory management module) sets the bypass flag field in a page table entry in the page table, to add the memory bypass attribute to the page table. In this case, the first API may be a user-defined API or the memory-mapped file function.

After the application completes applying to the operating system for allocating a storage space, FIG. 5 is still used as an example. If the application receives the first virtual address segment returned by the operating system based on the memory allocation request, the application invokes the first API in the operating system, and inputs the bypass attribute setting flag to the first API. Based on the memory bypass flag input to the first API, the operating system sets the bypass flag field for the page table entry in the page table. In this case, the first API may be a user-defined API or the memory-mapped protection function.

When the application applies to the operating system for allocating the storage space in the first storage medium, a part of code of the application is modified, so that the application can set the bypass flag field for the page table entry in the page by invoking the first API in the operating system through the processor. This is simple to implement.

Manner 2: The first API is a compiling interface encapsulated in a compiler. In a process of compiling the application by the compiler, the application invokes the first API through a second API or a directive in the compiler, to set the bypass flag field for the page table entry of the page.

The second API may be an API extended based on an existing API, or may be a newly added API. Herein, an implementation of the second API is not limited in embodiments of this application.

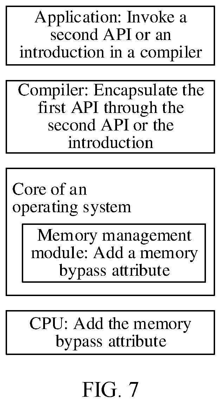

FIG. 4 is used as an example. The application APP invokes the first API in the operating system during compilation. The process is described with reference to FIG. 7.

FIG. 7 is another schematic diagram of setting a memory bypass attribute according to this application. As shown in FIG. 7, the first API is encapsulated in the second API or the directive in the compiler. In a process of compiling the application by the compiler, the application invokes the second API or the directive in the compiler, and inputs a bypass attribute setting flag to the second API or the directive. When receiving the bypass attribute setting flag, the second API or the directive invokes the first API in the operating system, and inputs the bypass attribute setting flag to the first API. Through the bypass attribute setting flag input to the first API, the operating system (for example, the memory management module in the core of the operating system) sets the bypass flag field in a page table entry in the page table, to add the memory bypass attribute to the page table.

In this implementation, a part of code of the application and the compiler is modified, so that the application can invoke the first API in the operating system by invoking the compiling interface in the compiler during compilation, to set the bypass flag field for the page table entry in the page. This is simple to implement.

FIG. 5 to FIG. 7 are still used as an example. After the operating system sets the bypass flag field for the page table entry in the page table, the processor (for example, the core (core) of the processor) also synchronizes the bypass flag field from the page table of the operating system to the TLB option of the TLB, to set the bypass flag field for the TLB option, thereby adding the memory bypass attribute to the processor.

In another possible implementation, a target application is installed in the electronic device, and the target application is for invoking the first API. For example, in a process in which the processor in the electronic device runs the target application, the target application invokes the first API to set the bypass flag field for the page table entry of the page, without invoking the first API interface through each application.

Step 301 is an optional step. In some embodiments, if the bypass flag field is already set in the page table, the operating system does not need to perform step 301. In some other embodiments, the operating system has a function of actively setting the bypass flag field in the page table. For example, when the electronic device is powered on and the operating system is initialized, the operating system sets the bypass flag field in the page table. In this case, step 301 does not need to be performed. In addition, step 301 may be performed only once, and does not need to be performed for more times.

Step 302: Based on the access requirement of the application that is recorded in the application and that the application has for a first storage space, the operating system adds the memory bypass flag to a bypass flag field in a page table entry corresponding to the first storage space.

The first storage space is any storage space in the first storage medium. In embodiments of this application, data stored in the first storage space is referred to as associated data, and the access requirement of the application for the first storage space in the first storage space is an access requirement of the application for the associated data. The access requirement of the application for the associated data is, for example, that the application needs to access the associated data for at least a target quantity of times in a first time period, or the associated data is service data of a target service to be accessed by the application in the first time period. The first time period is a time period after a current moment, that is, a future time period. Herein, duration of the first time period is not limited in embodiments of this application.

In a possible implementation, if the first storage space has been allocated to the application, the operating system adds the memory bypass flag to the page table entry based on the access requirement recorded in the application. The following steps 3021 to 3022 are used as an example.

Step 3021: Based on the access requirement recorded in the application and a virtual address of the first storage space, the operating system queries the page table entry corresponding to the first storage space.

FIG. 6 is used as an example. The application requests, based on the access requirement recorded in the application, the operating system to set the memory bypass flag for the first storage space. In this way, when receiving the request of the application, the operating system queries, based on the virtual address of the first storage space, the page table entry corresponding to the first storage space. The following step Al and step A2 are used as an example.

Step A1: If the first storage space in the first storage medium is already allocated to the application, the application sends a bypass flag setting request to the operating system, where the bypass flag setting request indicates to set a memory bypass flag for the first storage space.

The bypass flag setting request includes a virtual address where the associated data of the first storage space is located, or the bypass flag setting request includes a start address of a virtual address segment of the to-be-set memory bypass flag and a length of the virtual address segment. A storage space indicated by the virtual address segment includes the first storage space, or the bypass flag setting request includes the virtual address segment.

As shown in FIG. 6, when the application applies to the operating system for memory allocation, the operating system (for example, the memory management module in the core of the operating system) sets the bypass flag field for the page table entry of the page table. After the application applies to the operating system for allocating the storage space in the first storage medium, the operating system (for example, the memory management module) allocates at least one storage space in the first storage medium to the application, and creates at least one page for the application, where the at least one page corresponds to the at least one storage space. Then, the operating system creates a page table for the application based on the at least one page and the at least one storage space. The page table includes at least one page table entry, and each page table entry is for storing a page number of one page and a page frame number of a corresponding storage space. The operating system returns a first virtual address segment to the application based on the at least one page, where the first virtual address segment indicates the at least one page. For example, a start address of the first virtual address segment is a start address of the first page of the at least one page, and an end address of the first virtual address segment is an end address of the last page of the at least one page. A length of the first virtual address segment is a length of the at least one page.

When the application receives the first virtual address segment, all related data used in a process of running the application by the processor can be stored in a storage space corresponding to the first virtual address segment.

For at least one piece of data to be accessed by the application, if the application records a requirement flag corresponding to any piece of data, and the any piece of data is stored at a virtual address in the first virtual address segment, a page frame corresponding to a page in which the virtual address is located is used as the first storage space, and the any piece of data is used as the associated data of the first storage space, to generate the bypass flag setting request including the virtual address. The requirement flag indicates an access requirement of the application for the at least one piece of data.

In some embodiments, a plurality of pieces of data to be accessed by the application all correspond to the requirement flag. In this case, the application uses a virtual address that is in the first virtual address segment and that is for storing the plurality of pieces of data as a virtual address segment (that is, a second virtual address segment) of the to-be-set memory bypass flag, and generates a bypass flag setting request including the second virtual address segment. Alternatively, if virtual addresses in the second virtual address segment are continuous virtual addresses, the bypass flag setting request does not include the second virtual address segment, but includes a start address of the second virtual address segment and a length of the second virtual address segment.

In another possible implementation, the bypass flag setting request further includes at least one of the following: a memory bypass flag and a requirement flag of the second storage medium. Certainly, the bypass flag setting request may not include the memory bypass flag or the requirement flag.

Step A2: The operating system receives the bypass flag setting request, and queries, based on the bypass flag setting request and the virtual address of the first storage space, the page table entry corresponding to the first storage space.

After the operating system receives the bypass flag setting request, if the bypass flag setting request includes the virtual address of the first storage space, the operating system obtains a page number in the virtual address, where the page number indicates a page in which the first storage space is located, and then the operating system queries the page table for a page table entry including the page number.

If the bypass flag setting request includes the second virtual address field, the operating system determines, based on the second virtual address field, a page number of each page corresponding to the second virtual address field, to align address pages. For ease of description, each page corresponding to the second virtual address field is referred to as a first page. Alternatively, if the bypass flag setting request includes the start address and the length of the second virtual address field, the operating system determines, based on the start address, a page indicated by the start address, and determines, based on the length of the second virtual address field, a page indicated by the start address and a target quantity of pages following the page as the first page. If the length of the second virtual address field is an integer multiple of a length of a single page, the target quantity is equal to the multiple, or if the multiple is not an integer, the target quantity is one greater than the multiple.

After determining each first page corresponding to the second virtual address segment, for any first page, the operating system queries the page table for a page table entry including a page number of the first page. If the first page is the page in which the first storage space is located, the operating system queries the page table for the page table entry including the page number of the first page, that is, queries the page table entry corresponding to the first storage space.

Step 3022: The operating system adds a memory bypass flag to the page table entry that is in the page table and that corresponds to the first storage space.

For any first page, if any page table entry in the page table includes the page number of the first page, the operating system adds a first memory bypass flag to a bypass flag field of the any page table entry. The following cases 1 and 2 are used as an example.

Case 1: When creating the page table, the operating system adds a second memory bypass flag to a bypass flag field of each page table entry in the page table. If any page table entry in the page table includes the page number of the first page, the second memory bypass flag in the bypass flag field of the any page entry is modified to the first memory bypass flag.

Case 2: When creating the page table, the operating system does not add any content to a bypass flag field of each page table entry in the page table, so that the bypass flag field is empty. If any page table entry in the page table includes the page number of the first page, the operating system adds the first memory bypass flag to the bypass flag field of the any page entry.

In a first time period after current time, the application may further access some storage spaces in the first storage medium for a quantity of times less than a target quantity of times, and the operating system sets the second memory bypass flag for a page (that is, a second page) in which the some storage spaces are located. It may be understood that the second page is each page except the first page in the at least one page created for the application. For the case 1, each page table entry in which the memory bypass flag is not modified in the page table is a page table entry corresponding to the second page. Because the memory bypass flag in the page table entry corresponding to the second page is the second memory bypass flag, the operating system does not need to set the second memory bypass flag again for the page table entry corresponding to the second page. For the case 2, because the bypass flag field of the page table entry corresponding to the second page is empty, the operating system adds the second memory bypass flag to the bypass flag field of the page table entry corresponding to the second page.

In another possible implementation, the application sends the bypass flag setting request to the operating system based on the first virtual address segment. In this case, the bypass flag setting request includes the second virtual address segment and a third virtual address segment. The second virtual address segment corresponds to the requirement flag or the first memory bypass flag, and the third virtual address segment includes a virtual address other than the second virtual address segment in the first virtual address segment. Then, based on the second virtual address segment in the bypass flag setting request and the corresponding requirement flag or the first memory bypass flag, the operating system adds the first memory bypass flag to the page table entry corresponding to each first page in the page table. Based on the third virtual address segment in the bypass flag setting request, the operating system determines a page number of the second page, and adds the second memory bypass flag to a page table entry that is in the page table and includes the page number of the second page.

As shown in FIG. 6, the operating system (for example, the memory management module) adds the memory bypass flag to each page table entry in the page table. In addition, in a process of running the application, the processor may continuously access data in a storage space of the first storage medium. For a storage space that is in the first storage medium and that is accessed by the processor in a current time period, the processor reads a page table entry corresponding to the storage space in the page table into a TLB as a TLB entry. That is, when the processor (for example, the core of the processor) updates the TLB table, the processor reads the page table entry including the memory bypass flag to the TLB, and correspondingly synchronizes the memory bypass flag that is in the page table and that is stored by the first storage medium to a memory bypass flag field of the TLB entry. FIG. 3 is still used as an example. The core of the processor adds page table entries 0 to K in the page table to a TLB, to obtain TLB entries 0 to K. All the TLB entries 0 to K include the memory bypass flag.

Step 303: The processor obtains a data processing request of the application, where the data processing request indicates to process the associated data of the first storage space in the first storage medium.

The first storage space is a storage space that is in the first storage medium and includes the associated data, and the data processing request includes the virtual address of the first storage space. In a possible implementation, the data processing request is a data read request or a data write request. The data read request indicates to read the associated data in the first storage space, the data write request indicates to write the associated data to the first storage space, and the data write request further includes the associated data.

In a process of running the application by the processor, if the application has a requirement for accessing the first storage space, the processor generates the data processing request. For example, in a process of running the application, if the application needs to write data into the first storage space, the data processing request generated by the processor is a data write request; or if the application needs to read the data in the first storage space, the data processing request generated by the processor is a data read request.

Step 304: Based on the data processing request, the processor obtains the memory bypass flag corresponding to the first storage space. The memory bypass flag indicates a storage manner of using the second storage medium, and the storage manner is set based on the access requirement of the application for the first storage space.

In a possible implementation, the processor queries, based on the virtual address of the first storage space in the data processing request, the page table entry corresponding to the first storage space, and obtains the memory bypass flag of the first storage space from the found page table entry (for example, obtains the memory bypass flag from the memory bypass field of the page table entry).

For a process in which the processor queries the page table entry corresponding to the first storage space, the processor queries, based on the virtual address, the TLB of the processor for the page table entry corresponding to the first storage space, or queries, based on the virtual address, the page table of the first storage medium for the page table entry corresponding to the first storage space.

For example, the processor determines, based on the virtual address, a page number of a page in which the first storage space is located and an intra-page offset. Then, based on the page number of the page, the TLB is queried for a TLB entry including the page number. If the TLB entry including the page number is found, the memory bypass flag is obtained from the bypass flag field of the TLB entry. If the TLB entry including the page number is not found in the TLB, the processor reads, from the page table, the page table entry including the page number to the TLB, and then obtains the memory bypass flag from the page table entry in the TLB. Alternatively, the processor first obtains the memory bypass flag from the page table entry, and then reads the page table entry to the TLB.

Step 305: The processor processes the associated data based on the memory bypass flag.

For different memory bypass flags, processes of the associated data processed by the processor are different. For example, if the memory bypass flag indicates to use the second storage medium to store data in the first storage medium, the processor processes the associated data of the first storage space, and copies the associated data of the first storage space to the second storage medium. If the memory bypass flag indicates not to use the second storage medium to store data in the first storage medium, the processor processes the associated data of the first storage space, and skips performing the step of copying the associated data of the first storage space to the second storage medium.

In addition, the processor determines, by querying the TLB, that the data in the first storage space is already stored in the second storage medium. If it is found that a TLB entry includes a page number of a page in which the first storage space is located, it indicates that the data in the first storage space is already stored in the second storage medium. The processor processes the associated data of the first storage space by accessing the second storage medium. Otherwise, the processor processes the associated data of the first storage space by accessing the first storage medium.

The following describes step 305 based on the found TLB entry or page table entry that includes the page number.

If the memory bypass flag is obtained from the TLB entry, the processor obtains a page frame number of the first storage space from the found TLB entry, and concatenates the page frame number and the intra-page offset in the virtual address of the first storage space, to obtain a physical address of the first storage space. The processor queries, based on the physical address, the second storage medium for a cache line that includes the data in the first storage space, and accesses, based on the data processing request, a cache space that is in the cache line and that corresponds to the first storage space, to process the associated data of the first storage space. For example, if the data processing request is a data read request, the processor reads data from the cache space. In this case, the read data is the associated data of the first storage space. If the data processing request is a data write request, the processor writes the associated data carried by the data write request to the cache space.

In this case, the second storage medium already stores the associated data of the first storage space in the first storage medium, and the processor does not perform any operation on the data of the first storage space in the first storage medium based on the found memory bypass flag, but processes the data write request.

If the processor obtains the memory bypass flag from the page table entry in the page table, the processor obtains the page frame number of the first storage space from the found page table entry, and concatenates the page frame number and the intra-page offset in the virtual address of the first storage space, to obtain the physical address of the first storage space. The processor accesses, based on the data processing request, the first storage space that is in the first storage medium and indicated by the physical address, to process the associated data of the first storage space. For example, if the data processing request is a data read request, the processor reads data from the first storage space. If the data processing request is a data write request, the processor writes the associated data carried by the data write request to the first storage space.

In this case, if the memory bypass flag is the first memory bypass flag, the processor copies the data (that is, the associated data) in the first storage space to the cache line in the second storage medium. If the memory bypass flag is the second memory bypass flag, the processor does not perform the step of copying the data in the first storage space to the cache line in the second storage medium.

FIG. 3 is used as an example. In FIG. 3, it is assumed that the first storage medium is a DDR, and the second storage medium is an HBM. The processor (for example, the core of the processor) adds, by querying the page table or the TLB, a memory bypass flag corresponding to a to-be-accessed storage space in the DDR to a data processing request of the APP, and sends the data processing request that carries the memory bypass flag to a determining module in the processor. Based on the memory bypass flag, the determining module determines whether data in the storage space needs to be copied to the HBM. If the hot data in the storage space needs to be copied to the HBM, it indicates that the data in the storage space is hot data. For example, the data processing request is a data read request. After reading the hot data from the storage space in the DDR, the determining module copies the hot data to the HBM. Then, when reading the hot data in the storage space again, the processor can directly read the hot data from the HBM. If the data in the storage space does not need to be copied to the HBM, it indicates that the data in the storage space is cold data. For example, the data processing request is a data read request. After reading the cold data from the storage space in the DDR, the processor does not copy the cold data to the HBM.

In a possible implementation, when a size of the first storage space is less than a size of the cache line in the second storage medium, if the data in the first storage space is copied to the cache line in the second storage medium, the processor further copies data in other storage spaces in the first storage medium to the cache line, to fill the cache line. In addition, when an idle cache line of the second storage medium is insufficient, the processor evicts data in a non-idle cache line of the second memory from the second storage medium, so that the non-idle cache line becomes an idle cache line. Then, the processor copies the data in the first storage space and the data in the other storage spaces in the first storage medium together to the idle cache line.

The following describes the foregoing steps 304 and 305 with reference to FIG. 6: After the core of the processor receives the data processing request of the application, the data processing request is sent to the core of the processor, the core of the processor queries, based on the data processing request, the TLB or the page table for the memory bypass flag corresponding to the first storage space, adds the found memory bypass flag to the data processing request, and sends, to an uncore (uncore) part of the processor, the data processing request that carries the memory bypass flag. Then, based on the memory bypass flag in the data processing request, the uncore part determines whether the associated data of the first storage space needs to be copied to the second storage medium, and performs a related processing process. It may be understood that the uncore part includes the determining module in FIG. 4, and can perform a function of the determining module.

According to the method provided in this application, when the data processing request of the application for the first storage space in the memory is received, the memory bypass flag corresponding to the first storage space is obtained. The memory bypass flag indicates the storage manner of using the cache, and the storage manner is set based on the access requirement of the application for the first storage space. Therefore, when the associated data of the first storage space is processed based on the obtained memory bypass flag, the storage manner of using the cache for the associated data can be determined based on the access requirement of the application for the first storage space. In this way, a cache behavior is controlled based on the access requirement of the application, thereby improving a cache hit rate. In addition, only when the memory bypass flag corresponding to the first storage space is the first memory bypass flag, the processor copies the associated data of the first storage space to the cache, thereby avoiding frequently copying data from the first storage medium to the cache, and reducing memory bandwidth consumption of the first storage medium.

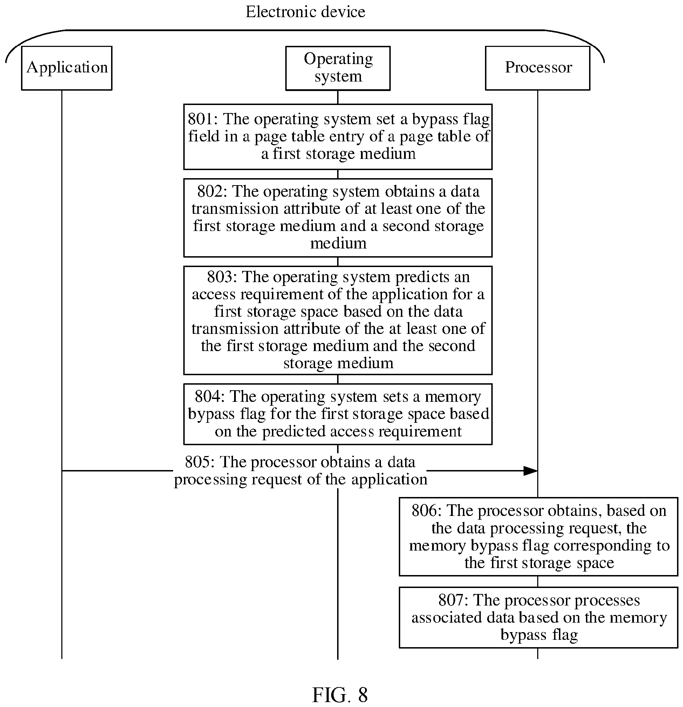

In another possible implementation, the operating system may further add the memory bypass flag to a corresponding bypass flag field based on a predicted access requirement of the application for the first storage space. For example, FIG. 8 is a flowchart of another data processing method according to this application. The method is applied to an electronic device. The electronic device includes a first storage medium and a second storage medium. The first storage medium is a memory of the electronic device, and the second storage medium is a cache of the memory. As shown in FIG. 8, the method includes the following step 801 to step 807.

Step 801: An operating system in the electronic device sets a bypass flag field for a page table entry in a page table of the first storage medium.

In a possible implementation, when the operating system in the electronic device starts to run, the bypass flag field is set in the page table entry of the page table of the first storage medium, and a processor is triggered to set the bypass flag field in a TLB entry in a TLB.

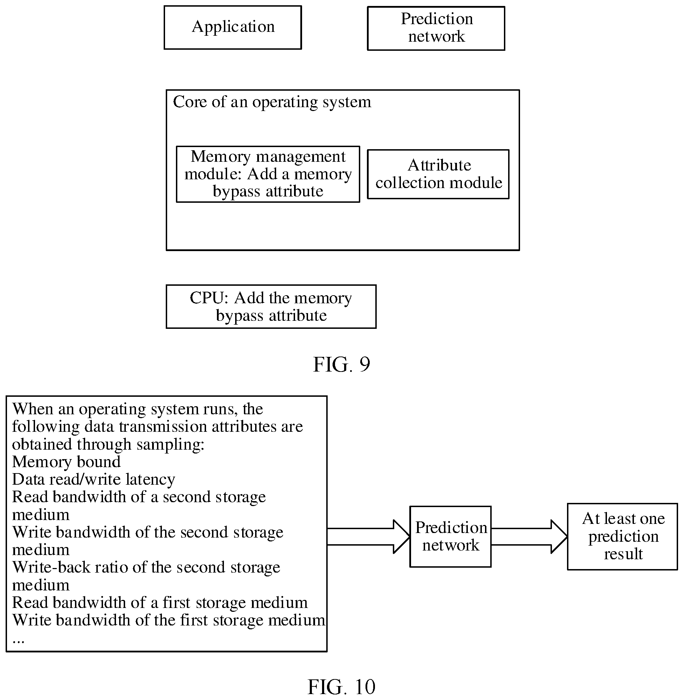

Alternatively, FIG. 9 is another schematic diagram of setting a memory bypass attribute according to this application. Based on a prediction network, an operating system (for example, a memory management module in a core of the operating system) sets, the bypass flag field in the page table entry of the page table of the first storage medium, to add a memory bypass attribute to the operating system. Then, a processor (for example, a core (core) of the processor) further synchronizes the bypass flag field from the page table of the operating system to a TLB option of a TLB, to add the memory bypass attribute to the processor.

The prediction network is for predicting an access requirement of an application for each storage space in the first storage medium. The prediction network is an artificial intelligence (artificial intelligent, AI) model, and the AI model includes a machine learning model, a deep learning model, a reinforcement learning model, or the like. For example, the prediction network is a convolutional neural network or a decision tree.

As shown in FIG. 3, a server completes training of a prediction network, so that the prediction network has a capability of predicting the access requirement of the application for each storage space of the first storage medium. Then, the electronic device obtains the prediction network from the server. Alternatively, the electronic device completes training of the prediction network, to obtain the trained prediction network. The server is a local server or a cloud server. Herein, a type of the server is not limited in embodiments of this application.

FIG. 3 and FIG. 9 are further used as an example. After the electronic device obtains the prediction network, the operating system (for example, the memory management module in the operating system) is triggered to set a bypass flag field for a page table entry in a page table of the first storage medium, to add a memory bypass attribute to the page table. In addition, the processor adds the memory bypass attribute (refer to the foregoing related descriptions for details).

In this implementation, a user does not need to modify code of the application, and the operating system does not need to provide the first API, provided that the prediction network can be obtained, and the bypass flag field can be set for the page table entry in the page table of the first storage medium. This is simple to operate.

In addition, step 801 is an optional step. In some embodiments, if the bypass flag field is already set in the page table, the operating system does not need to perform step 801. In addition, step 801 may be performed once, and does not need to be performed for more times.

Step 802: The operating system obtains a data transmission attribute of at least one of the first storage medium and the second storage medium, and the data transmission attribute indicates impact of the storage medium on efficiency of data transmission.

The data transmission attribute includes at least one of the following: a memory bound (Mem bound) of the processor, a data read/write latency of the processor, a read bandwidth of the first storage medium, a write bandwidth of the first storage medium, a read bandwidth of the second storage medium, a write bandwidth of the second storage medium, and a write-back ratio of the second storage medium.

The memory bound is a memory bandwidth between the processor and a cache and a memory of each level. The data read/write latency is a latency (for example, an average latency) that occurs when the processor reads/writes data in the cache and the memory of each level. The read bandwidth of the first storage medium is a bandwidth occupied for reading data from the first storage medium by the processor. The write bandwidth of the first storage medium is a bandwidth occupied for writing data to the first storage medium by the processor. The read bandwidth of the second storage medium is a bandwidth occupied for reading data from the second storage medium by the processor. The write bandwidth of the second storage medium is a bandwidth occupied for writing data to the second storage medium by the processor. The write-back ratio of the second storage medium is a ratio of data that is written back to the first storage medium to evicted data of the second storage medium.

When the processor runs the operating system, the processor collects the data transmission attribute of the at least one storage medium at an interval of a second time period, to periodically obtain the data transmission attribute of the at least one storage medium, thereby reducing occupied resources of the processor. Duration of the second time period may be set based on a specific implementation scenario. Herein, the duration of the second time period is not limited in embodiments of this application.

For example, each time the second time period elapses, the operating system samples at least one of following: the memory bound of the processor, the data read/write latency of the processor, the read bandwidth of the first storage medium, the write bandwidth of the first storage medium, the read bandwidth of the second storage medium, the write bandwidth of the second storage medium, and the write-back ratio of the second storage medium in the second time period, to obtain the data transmission attribute.

Step 803: The operating system predicts the access requirement of the application for the first storage space based on the data transmission attribute of the at least one of the first storage medium and the second storage medium.

In a possible implementation, the operating system inputs the data transmission attribute to the prediction network, and predicts, based on the input data transmission attribute using the prediction network, the access requirement of the application for the first storage space.

FIG. 10 is a schematic diagram of predicting an access requirement of an application for a storage space according to this application. When the operating system runs, the operating system obtains, through sampling, the data transmission attribute of the at least one of the first storage medium and the second storage medium: the memory bound and the data read/write latency of the processor; the read bandwidth, the write bandwidth, and the write-back ratio of the second storage medium; and the read bandwidth and the write bandwidth of the first storage medium. The operating system inputs the data transmission attribute to the prediction network, and the prediction network predicts, based on the input data transmission attribute, an access requirement of the first application for at least one storage space in the first storage medium, and outputs at least one prediction result. The at least one prediction result is in a one-to-one correspondence with the at least one storage space, and the prediction result indicates a predicted access requirement of the application for a single storage space. The single storage space is a page frame in the first storage medium. A prediction result corresponding to a page frame to which the first storage space belongs is the predicted access requirement of the application for the first storage space.

There are two possible cases for the predicted access requirement of the application for a single storage space (for example, a single page): The application needs to access the storage space in a first time period after current time for a quantity of times less than a target quantity of times; and the application needs to access the storage space in the first time period for at least the target quantity of times. For ease of description, the two cases are respectively referred to as: The application has no access requirement for the storage space, and the application has an access requirement for the storage space.

FIG. 4 and FIG. 9 are still used as an example. The foregoing steps 802 and 803 are described as follows. The operating system (for example, a feature collection module in the operating system) collects the data transmission attribute once every second time period, and inputs the collected data transmission attribute to the prediction network. The prediction network predicts, based on the input data transmission attribute, an access requirement of the first application for at least one storage space in the first storage medium.

Step 804: Based on the predicted access requirement, the operating system sets the memory bypass flag for the first storage space.

In a possible implementation, the operating system queries, based on the predicted access requirement of the application for the first storage space and a physical address of the first storage space, a page table entry corresponding to the first storage space, and then adds the memory bypass flag corresponding to the first storage space to the page table entry.

For example, if the prediction network predicts, by using a page frame as a unit, an access requirement of the application for a page frame, at least one prediction result output by the prediction network corresponds to at least one page frame number of a page frame. For a page frame number corresponding to any prediction result, the operating system queries a page table (or a TLB) for a page table entry including the page frame number.

For example, the first storage space is any page frame in the first storage medium. The physical address of the first storage space is a page frame number of the any page frame, and the operating system queries a page table (or a TLB) for a page table entry including the page frame number. After that, if the prediction result corresponding to the page frame to which the first storage space belongs indicates that the application has an access requirement for a corresponding storage space, the operating system adds the first memory bypass flag to the found page table entry. If the prediction result indicates that the application has no access requirement for the corresponding storage space, the operating system adds the second memory bypass flag to the found page table entry.

Step 805: The processor obtains a data processing request of the application, where the data processing request indicates the processor to process associated data of the first storage space in the first storage medium.

Step 805 is similar to step 303. Herein, step 805 is not described again in embodiments of this application.

Step 806: Based on the data processing request, the processor obtains the memory bypass flag corresponding to the first storage space. The memory bypass flag indicates a storage manner of using the second storage medium, and the storage manner is set based on the access requirement of the application for the first storage space.

Step 806 is similar to step 304. Herein, step 806 is not described again in embodiments of this application.

Step 807: The processor processes the associated data based on the memory bypass flag.

Step 807 is similar to step 305. Herein, step 807 is not described again in embodiments of this application.

According to the method provided in embodiments of this application, when the data processing request of the application for the first storage space in the memory is received, the memory bypass flag corresponding to the first storage space is obtained. The memory bypass flag indicates the storage manner of using the cache, and the storage manner is set based on the access requirement of the application for the first storage space. Therefore, when the associated data of the first storage space is processed based on the obtained memory bypass flag, the storage manner for the associated data to use the cache can be determined based on the access requirement of the application for the first storage space. In this way, a cache behavior is controlled based on the access requirement of the application, thereby improving a cache hit rate. In addition, the access requirement of the application for the first storage space is predicted based on the current data transmission attribute of the at least one storage medium. This avoids use of the application to record the access requirement of the application for the first storage space, and can satisfy a real-time access requirement of the application for a storage space in the memory. Therefore, the cache behavior can be controlled in real time by predicting the memory bypass flag set for the access requirement of the application for the first storage space is located.

The foregoing steps 302 and 804 are both processes in which the operating system sets the memory bypass flag for the first storage space based on the access requirement of the application for the first storage space. This enables the processor to sense an access memory attribute of the application through the set memory bypass flag corresponding to each storage space in the first storage medium, thereby overcoming a problem that the processor cannot sense the access memory attribute of the application. When accessing a storage space in the memory, the processor can determine, based on the memory bypass flag, whether to copy data in the storage space to the cache. Therefore, the cache behavior is controlled based on the access requirement of application, so that the processor can subsequently obtain from the cache data required by the application, thereby improving the cache hit rate.

In addition, in this application, to reflect an interaction process in the electronic device, step 301 is performed by the application, and step 302 and step 801 to step 804 are performed by the operating system for description. It should be understood that these steps should be implemented by hardware (for example, the processor) by running the application or the operating system.

The foregoing method embodiments are described by using an example in which the bypass flag field is for storing a memory bypass flag of a single cache. In another possible implementation, the bypass flag field includes a plurality of indication bits. The plurality of indication bits may be bits reserved in a page table entry, or may be bits extended in a page table entry. The plurality of indication bits are in a one-to-one correspondence with a plurality of levels of caches (that is, a plurality of second storage media) of the first storage medium, and each indication bit is for storing a memory bypass flag of a corresponding cache. The page table shown in Table 3 is used as an example. The bypass flag field has M indication bits, and the M indication bits are in a one-to-one correspondence with M caches of levels L1 to LM, where M is a positive integer.

**Table 3**

| Page table entry | Page number | Page frame number | Bypass flag field | | | |
|---|---|---|---|---|---|---|
| | | | L1 | L2 | ... | LM |
| Page table entry 0 | 0 | 0 | Memory bypass flag | Memory bypass flag | ... | Memory bypass flag |
| Page table entry 1 | 1 | 1 | Memory bypass flag | Memory bypass flag | ... | Memory bypass flag |
| ... | ... | ... | Memory bypass flag | Memory bypass flag | ... | Memory bypass flag |
| Page table entry N | N | N | Memory bypass flag | Memory bypass flag | ... | Memory bypass flag |

In this case, the memory bypass flag indicates a storage manner of using a corresponding cache, and the storage manner is set based on an access requirement of the application for a storage space in the first storage medium. In this case, the first storage medium is a memory or a cache of the electronic device. FIG. 2 is still used as an example. In this case, M=4, the first storage medium is the memory, and caches of levels L1 to L4 respectively correspond to four flag bits of the bypass flag field, or the first storage medium is a cache of level L1, and the second storage medium is a cache of level L2. It may be understood that the second storage medium is a cache of the first storage medium.

For this case, when querying the memory bypass flag corresponding to the first storage medium, the processor may find a plurality of memory bypass flags. In this case, step 305 is described as follows:

For any one of the plurality of memory bypass flags, a cache corresponding to an indication bit in which the memory bypass flag is located in the bypass flag field is the second storage medium.

After obtaining a physical address of a storage space in a to-be-accessed memory, the processor queries, based on the physical address, the second storage medium for a cache line including data in the first storage space. If it is found that the cache line exists in the second storage medium, the processor accesses, based on the data processing request, a cache space that is in the cache line and that corresponds to the first storage space. If the cache line corresponding to the first storage space does not exists in the second storage medium and the first storage medium is a cache, the processor queries, based on the physical address, the first storage medium for the cache line including the data in the first storage space. If it is found that the cache line exists in the first storage medium, the processor accesses, based on the data processing request, the cache space that is in the cache line of the first storage medium and that corresponds to the first storage space. If any memory bypass flag is a first memory bypass flag, the processor copies the data in the first storage space in the cache line to the second storage medium. If any memory bypass flag is a second memory bypass flag, the processor does not perform the step of copying the data in the first storage space in the cache line to the second storage medium. If it is found that the cache line does not exists in the first storage medium, the processor continues to query, based on the physical address, a next-level cache of the first storage medium for the data in the first storage space. Until in a cache or memory whose level is lower than that of the first storage medium, a target storage space storing the data in the first storage space is find. The processor accesses the target storage space based on the data processing request. If any memory bypass flag is the first memory bypass flag, the processor copies the data in the target storage space to the second storage medium and a cache whose level is lower than that of the second storage medium. If any memory bypass flag is the second memory bypass flag, the processor does not perform the step of copying the data in the target storage space to the second storage medium and a cache whose level is lower than that of the second storage medium.

The foregoing describes the data processing methods provided in this application. With reference to the accompanying drawings, the following further describes an apparatus, a chip, and an electronic device provided in this application. It should be understood that the apparatus, the chip, and the electronic device that are described below may perform any function of the electronic device or a part of the electronic device in any one of the foregoing methods.

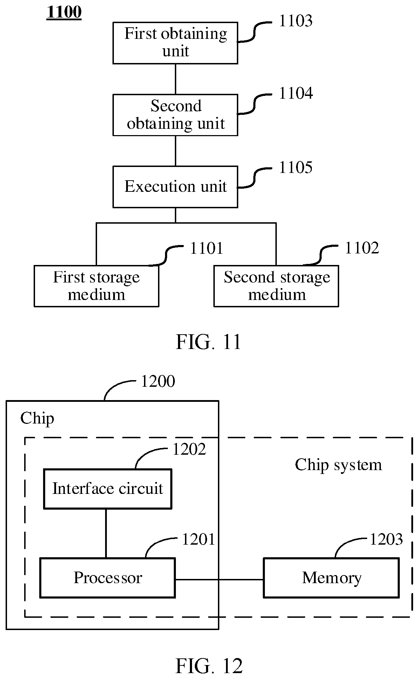

Refer to FIG. 11. This application provides a schematic structural diagram of a data processing apparatus. The apparatus 1100 shown in FIG. 11 may be the electronic device or a part of the electronic device in the foregoing embodiments, and is configured to perform the data processing methods performed by the electronic device. The apparatus 1100 includes a first storage medium 1101, a second storage medium 1102, a first obtaining unit 1103, a second obtaining unit 1104, and an execution unit 1105.

The first obtaining unit 1103 is configured to obtain a data processing request of an application. The data processing request indicates to process associated data of a first storage space in the first storage medium 1101. The first storage medium 1101 is a memory of the electronic device. The second storage medium 1102 is a cache of the memory;

The second obtaining unit 1104 is configured to obtain, based on the data processing request, a memory bypass flag corresponding to the first storage space. The memory bypass flag indicates a storage manner of using the second storage medium 1102, and the storage manner is set based on an access requirement of the application for the first storage space.

The execution unit 1105 is configured to process the associated data based on the memory bypass flag.

It should be understood that the apparatus 1100 in this embodiment of this application may be performed through a CPU, or may be performed through an application-specific integrated circuit (application-specific integrated circuit, ASIC), or may be performed through a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), a data processing unit (data processing unit, DPU), a system on chip (system on chip, SoC), or any combination thereof. The apparatus 1100 may also perform the data processing methods shown in FIG. 3 to FIG. 10 through software. When the data processing methods are performed through software, the apparatus 1100 and modules of the apparatus 1100 may also be software modules.

In a possible implementation, the second storage medium 1102 is a high bandwidth memory HBM, a use manner of the HBM is a cache mode, and the cache mode indicates that the HBM is used as the cache of the memory.

In a possible implementation, the apparatus 1100 further includes:
an invoking unit, configured to: invoke a first application programming interface API in an operating system, and set a bypass flag field in a page table entry of a page table of the first storage medium 1101, where the bypass flag field is for storing the memory bypass flag; and
an adding unit, configured to add, based on the access requirement recorded in the application, the memory bypass flag to the bypass flag field in the page table entry corresponding to the first storage space.

In a possible implementation, the invoking unit is configured to:
when the application applies to the operating system for allocating a storage space in the first storage medium 1101 or after the application completes applying for allocating the storage space, invoke the first API, and set the bypass flag field in the page table entry of the page table.

In a possible implementation, the invoking unit is configured to:
in a process of compiling the application by a compiler, invoke the first API through a second API or a directive provided by the compiler, and set the bypass flag field in the page table entry of the page table.

In a possible implementation, the adding unit is configured to:
query, based on the access requirement recorded in the application and a virtual address of the first storage space, the page table entry corresponding to the first storage space; and
add the memory bypass flag to the page table entry.

In a possible implementation, the apparatus 1100 further includes:
a prediction unit, configured to predict, based on a data transmission attribute of at least one of the first storage medium 1101 and the second storage medium 1102, the access requirement of the application for the first storage space, where the data transmission attribute indicates impact of the storage medium on efficiency of data transmission; and
a setting unit, configured to set the memory bypass flag for the first storage space based on the predicted access requirement.

In a possible implementation, the prediction unit is configured to:
input the data transmission attribute to a prediction network, and predict, based on the input data transmission attribute using the prediction network, the access requirement of the application for the first storage space.

In a possible implementation, the setting unit is configured to:
query, based on the predicted access requirement and a physical address of the first storage space, a page table entry corresponding to the first storage space; and
add the memory bypass flag to the page table entry.

In a possible implementation, the data processing request includes the virtual address of the first storage space, and the second obtaining unit 1104 is configured to:
query, based on the virtual address, the page table entry corresponding to the first storage space; and
obtain the memory bypass flag from the page table entry.

In a possible implementation, the second obtaining unit 1104 is further configured to:
query, based on the virtual address, the page table of the first storage medium 1101 for the page table entry corresponding to the first storage space; or
query, based on the virtual address, a translation lookaside buffer TLB of a processor for the page table entry corresponding to the first storage space.

In a possible implementation, the execution unit 1105 is configured to:
if the memory bypass flag indicates to use the second storage medium 1102 to store the data in the first storage medium 1101, process the associated data of the first storage space, and copy the associated data of the first storage space to the second storage medium 1102; or
if the memory bypass flag indicates not to use the second storage medium 1102 to store data in the first storage medium 1101, process the associated data of the first storage space, and skip performing the step of copying the associated data of the first storage space to the second storage medium 1102.

It should be understood that the apparatus 1100 corresponds to the electronic device in the foregoing method embodiments, and the modules in the apparatus 1100 and the foregoing other operations and/or functions are respectively used to perform various steps and methods implemented by the electronic device in the method embodiments. For specific details, refer to the foregoing method embodiments. For brevity, details are not described herein again.

It should be understood that, when the apparatus 1100 processes data, division of the foregoing functional modules is merely used as an example for description. In actual application, the foregoing functions may be allocated to different functional modules for implementation based on requirements. That is, an internal structure of the apparatus 1100 is divided into different functional modules, to implement all or some of the functions described above. In addition, the apparatus 1100 provided in the foregoing embodiment shares a same concept with the foregoing method embodiments. For a specific implementation process of the apparatus 1100, refer to the foregoing method embodiments. Details are not described herein again.

It should be understood that the apparatus 1100 may be equivalent to the data processing system 100 (or 200), or equivalent to an execution component in the data processing system 100 (or 200).

FIG. 12 is a schematic structural diagram of a chip according to this application. As shown in FIG. 12, the chip 1200 includes a processor 1201 and an interface circuit 1202. The interface circuit 1202 is configured to receive instructions and transmit the instructions to the processor 1201. The processor 1201 may be, for example, a specific implementation form of the apparatus 1100 shown in FIG. 11, and may be configured to perform the foregoing data processing methods applied to the electronic device. The processor 1201 is coupled to a memory 1203. The memory 1203 is configured to store program code. When the program code is executed by the processor 1201, a chip system including the processor 1201, the interface circuit 1202, and the memory 1203 is enabled to perform the operation steps of the method in any one of the method embodiments in FIG. 3 to FIG. 10. The foregoing FIG. 7 is used as an example. The processor 1201 reads program code of a compiler from the memory 1203, compiles an application by running the program code of the compiler, and invokes a second API or a directive of the compiler to add a bypass flag field to a page table. In a subsequent process of running the application, the processor 1201 adds the bypass flag field to the page table, to perform the foregoing data processing method.

Optionally, there is at least one processor 1201 in the chip system. It should be understood that in embodiments of this application, the processor 1201 may be a CPU or another general purpose processor, or the processor 1201 may be one or more integrated circuits for performing the solutions of this application, for example, a digital signal processor (digital signal processor, DSP), an ASIC, a PLD, an FPGA or another programmable logic device, a discrete gate or a transistor logic device, and a discrete hardware component. The general purpose processor may be a microprocessor, any conventional processor, or the like.

Optionally, there may also be one or more memories 1203 in the chip system. The memory 1203 may be integrated with the processor 1201, or may be disposed separately from the processor 1201. This is not limited in this application. For example, the memory 1203 and the processor 1201 may be integrated in a same chip. As shown in FIG. 12, the memory 1203 and the processor 1201 may be separately disposed in different chips. A type of the memory 1203 and a manner of disposing the memory 1203 and the processor 1201 are not specifically limited in this application.

The memory 1203 may include a read-only memory and a random access memory, and provide instructions and data for the processor 1201. The memory 1203 may further include a nonvolatile random access memory. For example, the memory 1203 may further store information about a device type. Alternatively, the memory 1203 may be a volatile memory, or may include both a volatile memory and a nonvolatile memory.

The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limited description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus RAM (direct rambus RAM, DR RAM).

For example, the chip system may be an FPGA, an ASIC, a SoC, a CPU, a network processor (network processor, NP), a digital signal processor (digital signal processor, DSP), a micro controller unit (micro controller unit, MCU), a PLD, or another integrated chip.

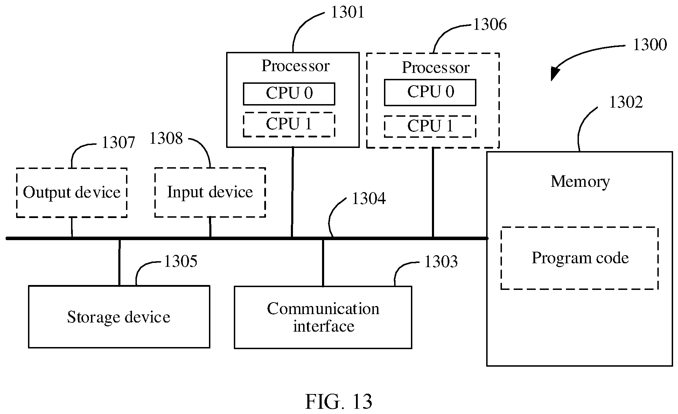

FIG. 13 is a schematic structural diagram of an electronic device according to this application. As shown in the figure, the electronic device 1300 includes a processor 1301, a memory 1302, a communication interface 1303, a bus 1304, and a storage device 1305. The processor 1301, the memory 1302, the communication interface 1303, and the storage device 1305 communicate with each other through the bus 1304, or may communicate with each other through another manner such as wireless transmission. The memory 1302 is configured to store instructions, and the processor 1301 is configured to execute the instructions stored in the memory 1302. The memory 1302 stores program code, and the processor 1301 may invoke the program code stored in the memory 1302 to perform the steps provided in the foregoing data processing methods (for example, FIG. 3 to FIG. 10).

For example, the processor 1301 may include one or more CPUs, for example, a CPU 0 and a CPU 1 shown in FIG. 13.

For example, the electronic device 1300 may include a plurality of processors, for example, the processor 1301 and a processor 1306 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

It should be understood that, in this application, an implementation of the processor 1301 is similar to an implementation of the processor 1201 in FIG. 12, and an implementation of the memory 1302 is similar to an implementation of the memory 1203 in FIG. 12. Herein, implementations of the processor 1301 and the memory 1302 are not described in embodiments of this application.

The communication interface 1303 is configured to communicate with another device or a communication network through any apparatus such as a transceiver. The communication interface 1304 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, or a combination thereof.

The bus 1304 is configured to transmit information between the foregoing components. In addition to the communication bus, the bus 1304 may further include a power bus, a status signal bus, and the like. However, for clear description, various types of buses are marked as the bus 1304 in the figure. The communication bus may be classified into an address bus, a data bus, a control bus, and the like. For example, the communication bus may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

The storage device 1305 may be a ROM or another type of static storage device that can store static information and instructions, or may be a RAM or another type of dynamic storage device that can store information and instructions, or may be an EEPROM, a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, or another magnetic storage device, or any other media that can be configured to carry or store expected program code in a form of instructions or a data structure and that can be accessed by the processor 1301. The storage device includes at least one memory 1302, but is not limited thereto. The storage device 1305 may exist independently, and be connected to the processor 1301 through the bus 1304. The storage device 1305 may also be integrated with the processor 1301.

For example, the memory 1302 and the storage device 1305 may be a first storage medium or a second storage medium in the electronic device 1300. At least one of the memory 1302 and the storage device 1305 may store program code for performing the data processing method in this application. The processor 1301 reads and runs the program code, to enable the electronic device 1300 to perform the data processing method in this application.

In some embodiments, the electronic device 1300 may further include an output device 1307 and an input device 1308. The output device 1307 communicates with the processor 1301, and may display information in a plurality of manners. For example, the output device 1307 may be a liquid crystal display (liquid crystal display, LCD), a light emitting diode (light emitting diode, LED) display device, a cathode ray tube (cathode ray tube, CRT) display device, a projector (projector), or the like. The input device 1308 communicates with the processor 1301, and may receive an input of a user in a plurality of manners. For example, the input device 1308 may be a mouse, a keyboard, a touchscreen device, or a sensor device.

It should be understood that the data processing apparatus 1100 according to this application may correspond to the electronic device 1300 in this embodiment of this application, and may correspond to a corresponding body in the data processing methods according to embodiments of this application. In addition, the foregoing and other operations and/or functions of the modules in the electronic device 1300 are respectively used to perform corresponding procedures of the methods in FIG. 3 to FIG. 10. For brevity, details are not described herein again.

This application further provides a computer-readable storage medium, for example, a memory including program code. The program code may be executed by a processor in an electronic device (or a chip) to perform the data processing methods in the foregoing embodiments. For an implementation of the computer-readable storage medium, refer to the memory 1203 in FIG. 12.

This application further provides a computer program product or a computer program. The computer program product or the computer program includes program code, and the program code is stored in the computer-readable storage medium. A processor of the electronic device reads the program code from the computer-readable storage medium, and the processor executes the program code, to enable the processor to perform the foregoing data processing method.

In addition, this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the data processing methods in the foregoing method embodiments.

In this application, the apparatus, the device, the computer-readable storage medium, the computer program product, or the chip is configured to perform the corresponding methods provided above. Therefore, for beneficial effects that can be achieved by the apparatus, the device, the computer-readable storage medium, the computer program product, or the chip, refer to the beneficial effects in the corresponding methods provided above. Details are not described herein again.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed in a computer, procedures or functions according to embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive (solid-state drive, SSD).

The foregoing descriptions are merely specific implementations of this application. Any variation or replacement readily figured out by a person skilled in the art based on the specific implementations provided in this application shall fall within the protection scope of this application.

## Claims

1. A data processing method, wherein the method is applicable to an electronic device comprising a first storage medium and a second storage medium, and the method comprises:
obtaining a data processing request of an application, wherein the data processing request indicates to process associated data of a first storage space in the first storage medium, the first storage medium is a memory of the electronic device, and the second storage medium is a cache of the memory;
obtaining, based on the data processing request, a memory bypass flag corresponding to the first storage space, wherein the memory bypass flag indicates a storage manner of using the second storage medium, and the storage manner is set based on an access requirement of the application for the first storage space; and
processing the associated data based on the memory bypass flag.

2. The method according to claim 1, wherein the second storage medium is a high bandwidth memory HBM, a use manner of the HBM is a cache mode, and the cache mode indicates that the HBM is used as the cache of the memory.

3. The method according to claim 1 or 2, wherein before the obtaining, based on the data processing request, a memory bypass flag corresponding to the first storage space, the method further comprises:
invoking a first application programming interface API in an operating system, and setting a bypass flag field in a page table entry of a page table of the first storage medium, wherein the bypass flag field is for storing the memory bypass flag; and
adding, based on the access requirement recorded in the application, the memory bypass flag to the bypass flag field in the page table entry corresponding to the first storage space.

4. The method according to claim 3, wherein the invoking a first application programming interface API in an operating system, and setting a bypass flag field in a page table entry of a page table of the first storage medium comprises:
when the application applies to the operating system for allocating a storage space in the first storage medium or after the application completes applying for allocating the storage space, invoking the first API, and setting the bypass flag field in the page table entry of the page table.

5. The method according to claim 3, wherein the invoking a first application programming interface API in an operating system, and setting a bypass flag field in a page table entry of a page table of the first storage medium comprises:
in a process of compiling the application by a compiler, invoking the first API through a second API or a directive provided by the compiler, and setting the bypass flag field in the page table entry of the page table.

6. The method according to claim 3, wherein the adding, based on the access requirement recorded in the application, the memory bypass flag to the bypass flag field in the page table entry corresponding to the first storage space comprises:
querying, based on the access requirement recorded in the application and a virtual address of the first storage space, the page table entry corresponding to the first storage space; and
adding the memory bypass flag to the page table entry.

7. The method according to claim 1 or 2, wherein before the obtaining, based on the data processing request, a memory bypass flag corresponding to the first storage space, the method further comprises:
predicting, based on a data transmission attribute of at least one of the first storage medium and the second storage medium, the access requirement of the application for the first storage space, wherein the data transmission attribute indicates impact of the storage medium on efficiency of data transmission; and
setting the memory bypass flag for the first storage space based on the predicted access requirement.

8. The method according to claim 7, wherein the predicting, based on a data transmission attribute of at least one of the first storage medium and the second storage medium, the access requirement of the application for the first storage space comprises:
inputting the data transmission attribute to a prediction network, and predicting, based on the input data transmission attribute using the prediction network, the access requirement of the application for the first storage space.

9. The method according to claim 7, wherein the setting the memory bypass flag for the first storage space based on the predicted access requirement comprises:
querying, based on the predicted access requirement and a physical address of the first storage space, a page table entry corresponding to the first storage space; and
adding the memory bypass flag to the page table entry.

10. The method according to claim 1, 2, 4, 5, 6, 8, or 9, wherein the data processing request comprises the virtual address of the first storage space, and the obtaining, based on the data processing request, a memory bypass flag corresponding to the first storage space comprises:
querying, based on the virtual address, the page table entry corresponding to the first storage space; and
obtaining the memory bypass flag from the page table entry.

11. The method according to claim 10, wherein the querying, based on the virtual address, the page table entry corresponding to the first storage space comprises:
querying, based on the virtual address, the page table of the first storage medium for the page table entry corresponding to the first storage space; or
querying, based on the virtual address, a translation lookaside buffer TLB of a processor for the page table entry corresponding to the first storage space.

12. The method according to claim 1, 2, 4, 5, 6, 8, 9, or 11, wherein the processing the associated data based on the memory bypass flag comprises:
if the memory bypass flag indicates to use the second storage medium to store data in the first storage medium, processing the associated data of the first storage space, and copying the associated data of the first storage space to the second storage medium; or
if the memory bypass flag indicates not to use the second storage medium to store data in the first storage medium, processing the associated data of the first storage space, and skipping performing the step of copying the associated data of the first storage space to the second storage medium.

13. A data processing apparatus, wherein the apparatus comprises a first storage medium and a second storage medium, and the apparatus further comprises:
a first obtaining unit, configured to obtain a data processing request of an application, wherein the data processing request indicates to process associated data of a first storage space in the first storage medium, the first storage medium is a memory of an electronic device, and the second storage medium is a cache of the memory;
a second obtaining unit, configured to obtain, based on the data processing request, a memory bypass flag corresponding to the first storage space, wherein the memory bypass flag indicates a storage manner of using the second storage medium, and the storage manner is set based on an access requirement of the application for the first storage space; and
an execution unit, configured to process the associated data based on the memory bypass flag.

14. An electronic device, wherein the electronic device comprises a processor, and the processor is configured to execute at least one piece of program code, to enable the electronic device to perform the data processing method according to any one of claims 1 to 12.

15. A computer-readable storage medium, wherein the storage medium stores at least one piece of program code, and the at least one piece of program code is read by a processor, to enable an electronic device to perform the data processing method according to any one of claims 1 to 12.
